# EUROPEAN PATENT APPLICATION

(11) **EP 4 825 618 A1**
(43) Date of publication of application: **21.10.2026**
(21) Application number: 24852973.7
(22) Date of filing: 02.12.2024
(51) Int. Cl.: B60J 1/20

(54) **SOLAR SCREENS AND PROCESSES FOR PRODUCTION THEREOF**

(30) Priority: 12.12.2023 PT 2023119128
(71) Applicant: PINHEIRO CARVALHO, Hugo Jose, 4740-380 FÃO (PT)
(72) Inventor: PINHEIRO CARVALHO, Hugo Jose, 4740-380 FÃO (PT)
(74) Representative: Zimmermann, Tankred Klaus
(86) International application number: PCT/PT2024/050045
(87) International publication number: WO 2025/127954

(57) **Abstract**

The present invention refers to solar screens (1) for placement inwards next to the windshield of a vehicle, and presenting a plurality of screen portions (10) configured so that can be unfolded and folded along folding regions (12) extending between neighbouring screen portions (10), whereby the solar screens (1) are configured so that present a better behaviour of shape retention of individual screen portions (10) and better handling ergonomic.

The present invention further refers to processes of production of solar screens (1) for placement inwards next to the windshield of a vehicle.

## Description

### Field of the invention

The present invention refers to the field of solar screens for placement inwards of the windshield of vehicles to render shading and prevent temperature increase in the inner space thereof, as well as to processes of production of solar screens of this type.

### Background of the invention

The prior art includes several solutions of solar screens of the type of the present invention, presenting a planar format and a plurality of portions configured so that provide unfolding and folding the set from a closed to an open position where the solar screen can be place inwards of the windshield of a vehicle, and vice-versa, so that can be stored in a smaller space.

The document US 4,202,396 discloses a solar screen of the type of the present invention configured so that presents a plurality of foldable screen portions corresponding to rectangular planar elements fabricated from a substantially rigid sheet material and united to each other along longitudinal edges thereof.

The document US 4,801,170 discloses a solar screen that comprises a sheet of flexible, light reflecting material, and two compression rods retained in different edges of said flexible material sheet, as well as stiffening means comprising a plurality of semirigid material strips, whereby each one of the semirigid material strips extends from a base portion to a top portion of said flexible material sheet.

The document US 4,958,880 also discloses a collapsible solar screen of a resilient material, in particular from corrugated cardboard, including symmetric top and base portions and a horizontal folding line in between.

The document US 5,267,599 discloses a solar screen comprising one or more layers of a flexible thin material and having an internal structural that is sufficient to retain the solar screen in a rigid position when placed inwards of the windshield of a vehicle. According to one feature, the internal structure comprises a thin support strip with an arched cross section. The thin support strip can be made of metal and is provided so that extends along a transversal direction only, so that does not prevent the risk of deflection of the solar screen along a vertical direction. According to another aspect, a series of creases formed alternately in opposite sides of the solar screen for providing the required rigidity.

The document US 2013/0032299 A1 also discloses a solar screen supported by metallic strips configured so that provide resistance to deflection along a direction of the solar screen, and thereby the possibility of rolling up and unrolling the solar screen. In particular, the metallic strips are configured in shape of half cannula and disposed along a single direction.

The document US 2005000664 A1 discloses a solar shadow provided with folding lines and comprising frontal, posterior and intercalary material layers. The intercalary layer is provided in an insulating material such as foam. The folding lines are formed by means of sonic or ultrasonic welding.

The document US 6,192,966 B1 discloses a solar shadow for an automobile produced by means of continuous supply of a resilient plastic foam panel or a composite material including a layer of such a resilient foam plastic panel to an oven and then to a moulding press. The solar shadow is provided with a surface with wider and narrower folding grooves disposed in parallel and alternately.

The document TW 201632378 (A) discloses a foldable solar shadow for automobiles that comprises continuous strips of a roll material, whereby the strips and the panels are laminated between top and base sheets of a material that is preferentially highly reflective of solar radiation.

The document WO 2019/148515 (A1) discloses a solar shadow for the windshield of an automobile that is provided with one or more longitudinal cut crease hot pressed and/or one or more transversal cut crease hot pressed.

There is, therefore, the need to provide a solar screen that provides a more ergonomic use with a simpler construction.

### General description of the invention

The objective of the present invention is to provide solar screens for placement inwards of the windshield of a vehicle, and configured so that provide better shape retention, in particular retaining the extension along an ascending or vertical direction, when placed standing in shadowing position, thereby reducing the risk of collapsing or folding, as well as a better handling ergonomics by a user, both while unfolding and while folding the solar screen.

The solar screens of the type of this invention present a planar format that defines a frontal side and a posterior side of at least approximately equal areas, and further present a plurality of screen portions configured manually operable so that the solar screens can be unfolded into an operative shadowing position and folded back to a closed position.

The solar screens are configured so that can be unfolded between closed and open positions, and vice-versa, whereby the solar screens present a simple general construction, with better use reliability and ergonomics and reduced production costs.

The objective is solved according to the present invention by means of solar screens according to claim 1, whereby preferred embodiments are disclosed in the depending claims.

In particular, the objective is solved by means of solar screens that present a portion structure in each screen portion, said portion structure being configured so that provides greater resistance to deflection along at least two orthogonal directions, as well as a more ergonomic handling and use of the solar screen.

The solar screens present a plurality of screen portions, preferentially at least four, more preferentially at least six, particularly preferentially at least eight, presenting a planar shape, whereby each screen portion includes a respective portion structure that extends along the perimeter region.

The solar screens comprise an envelope portion that confines a plurality of portion structures and connection regions between the screen portions, thereby configuring the manipulatable screen portions.

The envelope portion can be provided in one or more materials of sheet or cloth type whereby said materials can be flexible or semirigid.

The intercalary regions between neighbouring screen portions present a connection region that includes a mechanical connection between mutually opposing frontal and posterior sides of the envelope portion, for example a connection by means of sewing, along the intercalary alignment, so that forms pockets of collection that can collect and confine the portion structures and provide handling of folding and unfolding around the connection regions.

The solar screens comprise an envelope portion configured so that form a plurality of screen portions housing respective portion structures, whereby the portion structures are configured so that extend in the proximity and delimiting laterally the connection regions between screen portions, thereby reinforcing the ease of turning these around the connection regions.

The portion structures can be provided as one or more structural elements configured to provide a semirigid or rigid extension along the exterior perimeter region of each screen portion.

The present invention further refers to processes of production of solar screens.

The objective above is solved by the present invention by means of a process according to claim 13, whereby preferred embodiments are disclosed in the depending claims.

In particular, the process according to the invention includes a step of production of an envelope portion presenting one opening extending along an extension of the solar screen, a step of production of dividing regions between screen portions thereby forming a plurality of pocket spaces, a step of production of a plurality of portion structures, a step of arranging portion structures in respective collection spaces of screen portions and a step of closing the openings of the envelope portion.

The production process can be advantageously applied to solar screens according to any of the claims 1 to 12.

### Description of the Figures

The present invention shall be described hereinafter in greater detail based upon preferred embodiments and the drawings attached.

The Figures show, in simplified schematic representations:
- Figure 1:: frontal side view (F) of a solar screen (1) presenting a plurality of screen portions (10) in an open position;
- Figure 2:: views of a second envelope material (112) disposed on the interior side of an envelope portion (11) in the top drawing, of portion structures (13) in the drawing in the middle, and of a first envelope material (111) disposed on an outward position of the envelope portion (11) in the bottom drawing, of a solar screen (1) in an open position;
- Figure 3:: view of a solar screen (1) according to Figure 1, identifying the portion structures (13) disposed over the second envelope material (112) disposed on an inward position of the envelope portion (11);
- Figure 4:: top view of the embodiment according to Figure 1 whereby the solar screen (1) is at an intercalary position between the open and closed positions;
- Figure 5:: top view in cut of an embodiment of screen portion (10) whereby the envelope portion (11) comprises a first and second different envelope materials (111, 112) disposed juxtaposed so that the second wall material (112) extends inwards of the first wall material (111) thereby encapsulating the portion structure (13);
- Figure 6:: top view in cut of the embodiment of solar screen (1) according to Figure 5 at an open position;
- Figure 7:: view of a frontal side (F) of solar screen (1) at an open position;
- Figure 8:: view of a frontal side (F) of the set of portion structures (13) of solar screen (1);
- Figure 9:: view of a first step of production of a portion structure (13) of solar screen (1);
- Figure 10:: view of a second step of production of a portion structure (13).

### Description of preferred embodiments of the invention

The present invention shall be hereinafter described based upon preferred embodiments, without any limitation of the scope of the invention given that many other embodiments are possible within its scope.

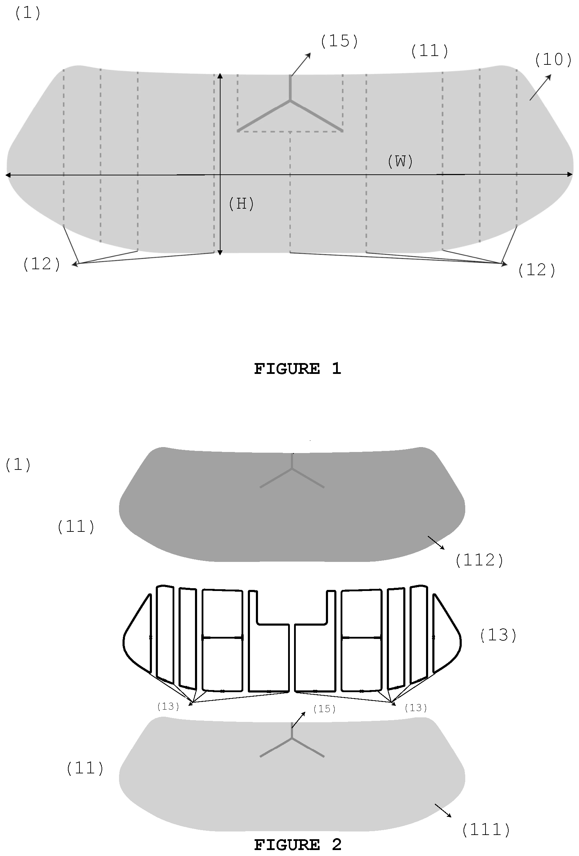

As represented in **Figures 1** and **2**, a first embodiment of solar screen (1) according to the present invention comprises a plurality of screen portions (10) configured in a side-by-side disposition and configured so that can be folded around folding regions (12) that extend between neighbouring screen portions (10). As known, a user can manipulate the solar screen (1) between closed and open positions, in a general disposition of the type accordion bellows, by means of unfolding and folding, respectively, of the plurality of screen portions (10) around the folding regions (12).

The solar screen (1) presents in this case a symmetric distribution of different formats of screen portions (10) relative to a central axis of solar screen (1).

The solar screen (1) is previously dimensioned so that can be placed in shadowing position inwards and next to the windshield of a vehicle, retained in a general disposition of the type shape fitting or magnetic, in particular including base and top regions disposed in the dashboard and roof regions or windshield regions proximal thereof, respectively, and lateral screen portions that can be kept at an angle relative to a transversal extension of the solar screen (1).

In particular, the solar screen (1) comprises a plurality of screen portions (10) that present folding regions (12) that extend between neighbouring screen portions (10).

The solar screen (1) can present only screen portions (10) operable along folding regions (12) of straight format, for example narrow rectangular, and that preferentially extend along directions parallel to each other and between bottom and top edges of the solar screen (1).

The solar screen (1) can comprise a plurality of screen portions (10) disposed successively associated by respective directly opposite lateral sides of the screen portions (10) so that can be united to each other by folding regions (12) that extend linearly along both of the lateral sides of neighbouring screen portions (10), whereby the folding regions (12) preferentially present a characteristic extension dimension bigger than the characteristic transversal dimension of the portion structure (13).

The solar screen (1) can present a plurality of screen portions (10) that present at least one of the following dimensions and dimensional relations:
- an extension along the height (H) between 20 and 100 cm, preferentially between 30 and 90 cm;
- an extension along the width (W) between 150 and 250 cm, preferentially between 170 and 230 cm;
- different screen portions (10) with respectively different heights (Hᵢ);
- different screen portions (10) with respectively different widths (Wᵢ);

The solar screen (1) can present a planar width (W) bigger than the extension of the windshield along a generally transversal direction thereof.

The solar screen (1) can present a maximum height (H), considered as the extension between mutually opposing base and top regions thereof, at least approximately equal to the extension of the windshield along a generally vertical direction.

According to another feature, the solar screen (1) presents a plurality of screen portions (10), including at least two, preferentially at least three, more preferentially at least four, different sets of screen portions (10), including a different maximum width (Wᵢ).

The solar screen (1) can include a first set of screen portions (10), preferentially including at least two, particularly preferentially at least four screen portions (10), presenting equal format including a first width (W₁) and disposed in the central region on both sides of a central symmetry axis of the solar screen (1).

The solar screen (1) can include a second set of screen portions (10), preferentially including at least two, particularly preferentially at least four screen portions (10), presenting equal format including a second width smaller than the first width (W₁).

The screen portions (10) of at least a first and second sets preferentially present a format at least approximately rectangular or trapezoidal.

The solar screen (1) can include a third set of screen portions (10), preferentially including at least two screen portions (10). The screen portions (10) of the third set preferentially present a format of triangular or trapezoidal type.

Moreover, the solar screen (1) can present an engagement region (15) configured so that provides shape retention around an inside rear-view mirror of a vehicle and, henceforth, an additional retention support of the solar screen (1) when disposed in shadowing position. Tee engagement region (15) is preferentially configured between adjacent regions of central and symmetric screen portions (10).

As can be recognised in **Figure 2**, the solar screen (1) comprises an envelope portion (11) that can include, at least, one first envelope material (111) and, preferentially, a second envelope material (112) that is different from the first, configured so that provide the exterior envelope that confines a plurality of portion structures (13).

According to one aspect of the present invention, the portion structures (13) can be configured so that provide resistance to deformation at least along two orthogonal directions, preferentially along at least one generally vertical direction and one generally horizontal direction, with reference to the disposition of the solar screen (1) in shadowing position.

In particular, the portion structure (13) is configured so that provides resistance to deformation along at least a vertical direction or at least approximately parallel to the direction of the gravity force, in case that the solar screen (1) is in shadowing position, and an at least approximately horizontal direction. It is herewith provided that the screen portions (10) present resistance in a transversal direction as in an ascending direction.

In the case of the embodiment represented in Figure 2, the solar screen (1) comprises a plurality of screen portions (10) each one including a portion structure (13) configured in a frame format with two pairs of extensions along two mutually orthogonal directions, so that provides resistance to deformation along at least two orthogonal directions.

The solar screen (1) can present portion structures (10) configured in a frame format.

The solar screen (1) can present a plurality of screen portions (10) operable so that can be folded and unfolded around connection regions between neighbouring screen portions (10).

The solar screen (1) can present a plurality of screen portions (10) with at least one of different format and different lateral extension.

Moreover, the solar screen (1) presents a plurality of screen portions (10) and a plurality of respective portion structures (13), whereby it is preferred when the screen portions (10) present at least one of at least approximately equal format and at least approximately equal lateral extension.

A portion structure (13) can be configured so that provides resistance to deflection at least along the direction orthogonal to the frontal and posterior sides (B) of the solar screen (1) and at least under the action of the gravity force, preferentially under the action of a force of at least 1 N, more preferentially of at least 5 N.

The solar screen (1) can comprise a portion structure (13) configured with a planar shape and so that provides maintenance of an at least approximately planar shape of a respective screen portion (10), whereby it is preferred when the portion structure (13) is configured so that provide resistance to deflection of a respective screen portion (10) and provides folding of the folding regions (12) without deformation of the neighbouring screen portions (10).

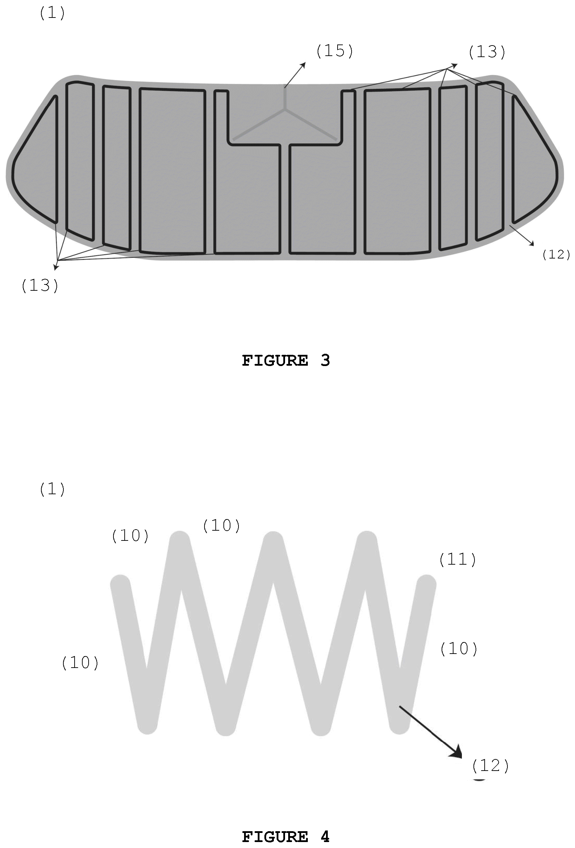

**Figures 3** and **4** represent an embodiment of solar screen (1) and respective configuration of a plurality of portion structures (13) disposed so that delimit respective folding (12) in-between neighbouring screen portions (10).

According to one aspect of the present invention, the solar screen (1) comprises an envelope portion (11) and a plurality of portion structures (13) inside a respective envelope portion (11), preferentially one portion structure (13) for each screen portion (10).

The envelope portion (11) can be configured so that extends along the entire surface of each of the opposing frontal (F) and posterior (B) sides around each portion structure (13), preferentially of the entire solar screen (1).

The envelope portion (11) can comprise a first envelope material (111), preferentially a flexible and planar thin material, such as for example, of folio, sheet, cloth or similar type.

The envelope portion (11) can extend along a portion of the frontal side (F) and a portion of the posterior side (B), both provided as planar elements, and preferentially so that confine the portion structures (13) inside respective closed pocket-like collection spaces of the envelope portion (11).

According to one aspect of the present invention, both the frontal and posterior side portions of the envelope portion (11), as well as the portion structures (13) are provided in a relatively light weight material.

According to another aspect, the solar screen (1) can be configured so that presents at least one of:
- a total weight of the solar screen (1) comprised between 0,1 and 3 kg, preferentially between 0,5 and 2 kg;
- a total weight of each one of the portion structures (13) of up to 140 g, preferentially up to 100 g, particularly preferentially of up to 80 g.

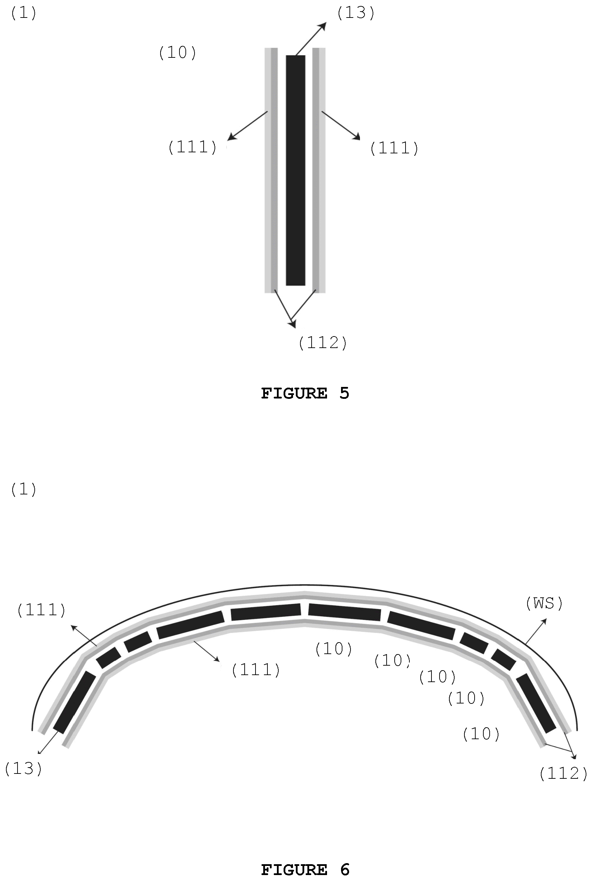

As represented in Figure 4, the envelope portion (11) can be provided so that completely confines the portion structures (13), as shall be explained in greater detail based upon figures 5 and 6.

**Figures 5** and **6** represent a preferred embodiment of a solar screen (1) according to the invention, whereby the envelope portion (11) comprises a first and second envelope materials (111, 112) that are different.

In the present case, the envelope portion (11) comprises two different flexible materials, whereby a first envelope material (111) is disposed outside of a second envelope material (112).

The envelope portion (11) is configured so that the first material (111) is disposed adjacent to the exterior side of the second material (112).

The envelope portion (11) is advantageously configured so that the first and second envelope materials (111, 112) are disposed juxtaposed with the second envelope material (112) inside of the first envelope material (111), so that configure a double layered envelope that confines the portion structures (13).

The first envelope material (111) preferentially presents an exterior surface that provides reflexion of daylight radiation, including of at least one of infrared and ultraviolet radiation.

The first envelope material (111) can be selected from the list of materials that includes: textile material, composite material including synthetic or natural substances, such as for example a material with a structure of alveolar or sponge type, a material including cork or derivate thereof.

The second envelope material (112) preferentially presents a wall thickness bigger than the wall thickness of the first material (111), and a material structure of alveolar or sponge type.

The second envelope material (112) can be selected from the list of materials that includes: textile material, composite material including synthetic or natural substances, such as for example a material with a structure of alveolar or sponge type, a material including cork.

As the expert in the field shall promptly recognise, the thickness of the envelope portion (11) and the width of the folding regions (12) are configured to provide the folding of neighbouring screen portions (10) towards a position where they are folded and sitting on each other over their entire surface.

According to one aspect of the present invention, the solar screen (1) presents a total thickness comprised between 8 and 16 cm, preferentially between 10 and 14 cm.

It is preferred when the solar screen (1) presents a total thickness that does not exceed the thickness of the portion structure (13) by more than 100 mm, preferentially by more than 60 mm.

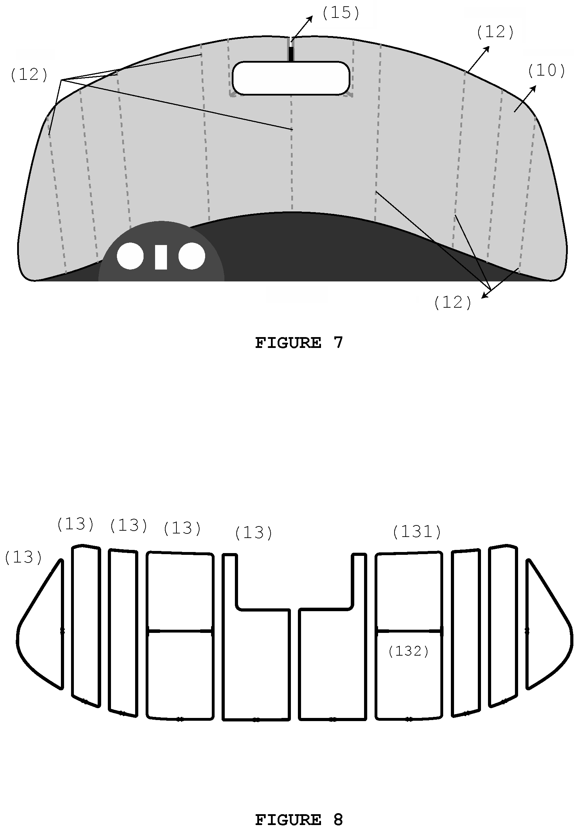

**Figure 7** represents an embodiment of a solar screen (1) according to the invention, including the representation of a dashboard (in black) and portion of the panel of instruments (in dark grey) of a car.

As represented, both the top portion and the bottom portion of the solar screen (1) present a shape that is at least approximately curved, preferentially with an at least approximately equal curvature.

Moreover, the regions of transition between the top and base regions of the solar screen (1) are also configured curved, preferentially with a curvature radius smaller than the curvature radius of the top and base regions.

Moreover, the solar screen (1) in this case presents a second embodiment of an engagement portion (15). In this case, two central screen portions (10) are configured so that delimit an opening close to the top region thereof, whereby said opening is configured so that can surround an inside rear-view mirror associated with the windshield of the vehicle.

**Figure 8** represents an embodiment of portion structures (13) comprised in a solar screen (1) according to the invention.

The solar screen (1) presents a plurality of different screen portions (10) and each one thereof presents a respective portion structure (13).

It is preferred when each portion structure (13) presents structural elements extending along at least two orthogonal alignments to each other.

It is preferred when each portion structure (13) presents at least two alignments orthogonal to each other in at least two different regions.

It is preferred when each portion structure (13) presents structural elements that extend along at least two pairs of orthogonal alignments, whereby said pairs of mutually orthogonal structural alignments are at least approximately parallel to each other and retained to each other.

It is preferred when each portion structure (13) provides resistance to deformation at least along a direction at least approximately parallel to a closed alignment defined by the portion structure (13).

It is preferred when each portion structure (13) provides resistance to deformation along at least most part, preferentially the totality, of the perimeter region of a respective screen portion (10).

It is herewith advantageously provided that each screen portion (10) presents a resistance to deformation along two mutually orthogonal extensions including in width, that is, at least approximately transversal to the gravity force and in height, that is, at least approximately parallel to the gravity force, thereby mitigating the possibility of collapse of the solar screen (1) under the action of the gravity force when the solar screen (1) is placed in shadowing position.

A portion structure (13) can present at least one structural element that extends along the perimeter of confinement space of a respective screen portion (10).

A portion structure (13) can present a structural element (131) extending along a convex closed alignment.

A portion structure (13) can present an alignment shape at least approximately closed, including of frame, ring or similar type.

A portion structure (13) can present a frame shape.

A portion structure (13) can present an elongated element that provides resistance to deflection, including resistance to flexion with force components along at least two mutually orthogonal directions, preferentially including a transversal and a vertical direction.

A portion structure (13) can be devoid of a structural element of planar format that extends along at least part of the area delimited by a perimeter structural element.

A portion structure (13) can be devoid of a structural element of mesh or grid type.

A portion structure (13) can present a first elongated structural element (131) provided in a semirigid or in a rigid material.

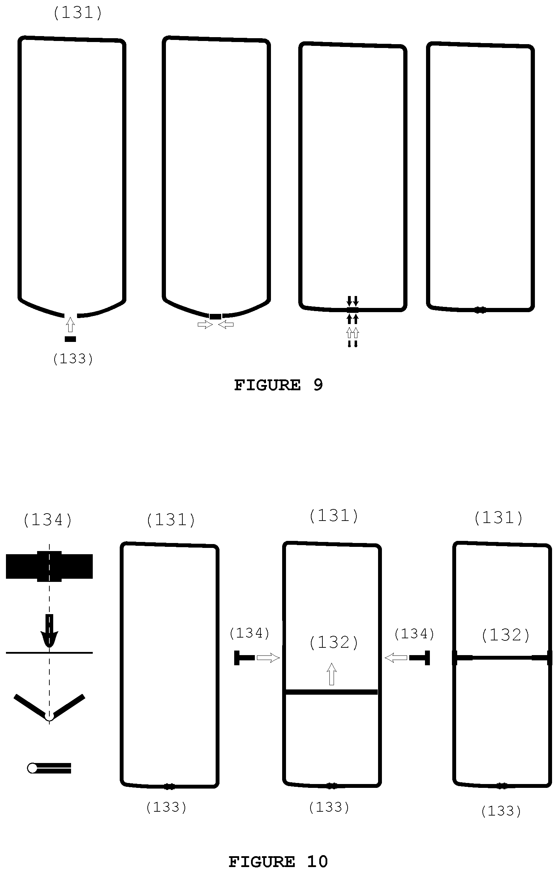

**Figures 9** and **10** represent embodiments of configuration of portion structures (13).

As represented, the solar screen (1) can present portion structures (13) that only present a first structural element (131) conformed in a general shape of frame type, and so that extends along the perimeter region of a respective screen portion (10).

Moreover, the solar screen (1) can present portion structures (13) that present, preferentially only, a first and a second structural elements (131, 132).

The portion structures (13) can be provided from structural elements of elongated format, preferentially of tubular shape, whereby it is preferred when each portion structure (13) only presents a first structural element (131) configured as a frame extending along the perimeter region of a respective screen portion (10), or further presents a second structural element (132).

The first and second structural elements (131, 132) can present at least one of shape and dimension of cross section that are at least approximately equal, whereby it is preferred when both first and second structural elements (131, 132) are provided in an at least approximately equal profile, presenting at least one of an equal shape and an equal dimension of the cross section.

The first structural elements (131) can present the shape of a frame, whereby the freed edges can be united by means of mechanical connection, preferentially a semirigid connection, particularly preferentially a rigid connection, including by means of at least one of: mechanical connection, such as for example by means of pressurised fitting, of by means of material connection, such as for example by means of welding.

Figure 9 represents a sequence of several successive steps of production of a portion structure (13), in a sequence of imagens from left to right, whereby the free edges of a first structural element (131) are united by means of a first mechanical connection part (133).

The first mechanical connection part (133) can be configured with a cross section with same shape as the one of the first structural element (131), for example a circular shape preferentially tubular, and a cross dimension configured so that ca be fitted under pressure in opposite top edges of the first structural element (131).

It is preferred when the fitting of the first connection piece (133) on the first structural element (131) can be made manually, for example by means of pressurised shape fitting. Alternatively, the first mechanical connection piece (133) can be retained on both free edges of the fist structural element (131) by means of mechanical connection or material connection. Optionally, the first connection piece (133) can be further retained by additional mechanical connection means, thereby ensuring the reliability of the connection.

The second structural elements (132) can be retained in diametral opposite portions, preferentially of height extensions of a first structural element (131) conformed with a frame shape. It is preferred when the second structural elements (132) can also be retained by means of the second mechanical connection parts (134).

Figure 10 first represents a series of successive steps, in the images further to the left and from top to bottom, to produce a second connection part (134).

As represented, the second connection part (134) can be obtained from the conformation of an initial portion with a form of a half cane, and so as to obtain a piece with a general "T" format that provides mechanical retention, preferentially by means of pressurized fitting, on a lateral portion of a first structural element (131), on the one hand, and on a portion of free edge of a second structural element (132), on the other hand.

## Claims

1. Solar screen for application in shadowing position inwards next to the windshield of a vehicle, the solar screen (1) presenting a frontal side (F) and a posterior side (B) and a plurality of screen portions (10) that are configured with an at least approximately planar format and operable around folding regions (12) that extend along folding alignments in intercalary manner between neighbouring screen portions (10), so that the solar screen (1) can be manually unfolded from a closed position to an open position where the solar screen (1) can be placed in shadowing position, and vice-versa,
**characterized**
**in that** the solar screen (1) comprises portion structures (13) configured so that provide resistance to deformation along at least two at least approximately orthogonal directions of respective screen portions (10).

2. Solar screen according to claim 1,
**characterized**
**in that** the solar screen (1) comprises a plurality of portion structures (13) each one thereof extending along at least four extensions coplanar with the planar shape of a respective screen portion (10), whereby it is preferred when each one of the portion structures (13) extends at least in the proximity of the perimeter region of a respective screen portion (10) so that provide resistance to deflection of the planar shape thereof.

3. Solar screen according to claim 1 or 2,
**characterized**
**in that** the solar screen (1) comprises portion structures (13) configured so that each one thereof extends along at least the most part, preferentially the totality, of a closed alignment within a respective screen portion (10), preferentially a closed alignment with a general shape of frame or ring type, whereby the closed alignment of each portion structure (13) preferentially corresponds, at least approximately, to at least a most part, or to the totality, of the extension of the perimeter region of a respective screen portion (10) so that the portion structures (13) provide folding of the folding regions (12) along intercalary regions between neighbouring screen portions (10).

4. Solar screen according to claims 1 to 3,
**characterized**
**in that** the solar screen (1) comprises portion structures (13) that include a first structural element (131) configured according to at least one of:
- presenting a generally narrow and elongated shape and configured with a general shape of frame type, at least approximately closed, preferentially so that the free edges of the first structural element (131) provided mutually opposite and neighbouring can be retained to each other thereby configuring a closed alignment;
- provided so that free edges can be retained to each other by means of a mechanical connection part (133), preferentially by means of a connection part configured so that can be fit under pressure onto the cross sections of the free edges of a first structural element (131);
and/ or
**in that** the solar screen (1) comprises portion structures (13) that include a first and second structural element (131, 132) configured according to at least one of:
- a first structural element (131) configured with a general shape of frame or arch type and a second structural element (132) disposed cross-wards along at least one cross dimension of the first structural element (131) and retained between opposite portions thereof,
- so that can be retained to each other in at least one of: regions in mutually opposite sides and corner regions of a first structural element (131).

5. Solar screen according to any one of claims 1 to 4,
**characterized**
**in that** the solar screen (1) comprises portion structures (13) that include at least one first structural element (131) provided in a structural material that presents at least one of the following physical features:
- presenting a tubular shape, preferentially including of circular or rectangular cross section;
- presenting a characteristic dimension of cross section between 0,5 and 10 mm, preferentially between 1 and 8 mm;
- a resistance to tension bigger than 100 Mpa, preferentially bigger than 120 MPa;
- a density smaller than 3.000 kg/m³, preferentially smaller than 2.800 kg/m³;
- a thermal dilatation coefficient, between 20 and 100°C, smaller than 500 10⁻⁶.K⁻¹, preferentially smaller than 300 10⁻⁶.K⁻¹.

6. Solar screen according to any one of claims 1 to 5,
**characterized**
**in that** the solar screen (1) comprises portion structures (13) including at least a first structural element (131) provided in a structural material selected from the list of materials that includes: a metallic material, an alloy of metallic materials, preferentially including aluminium or an aluminium alloy, a polymer composite material, preferentially a material including a polymer of natural origin, a composite material with fibre reinforcement, preferentially including reinforcement by at least one of: glass fibre and carbon fibre, a synthetic material configured for three-dimensional printing.

7. Solar screen according to any one of claims 1 to 6,
**characterized**
**in that** the solar screen (1) comprises an envelope portion (11) and a plurality of screen portions (10) with respective portion structures (13) arranged inside of respective collection spaces of the envelope portion (11), whereby the portion structures (13) are preferentially configured so that extend in the proximity and laterally delimiting the folding regions (12) between screen portions (10), thereby providing extensions of greater resistance to deflection than the folding regions (12) and thereby reinforcing the ease of turning the screen portions (10) around the connection regions (12).

8. Solar screen according to any one of claims 1 to 7,
**characterized**
**in that** the solar screen (1) comprise folding regions (12) that extend along the linear alignments in the intercalary regions between neighbouring screen portions (10) whereby the folding regions (12) include a mechanical connection between frontal (F) and posterior sides (B) of the envelope portion (11), preferentially a mechanical connection by means of sewing of opposite sides of an envelope material, thereby forming collection spaces that confine portion structures (13) within the envelope portion (11) and provide folding and unfolding handling of screen portions (10) around associated folding regions (12).

9. Solar screen according to any one of claims 1 to 8,
**characterized**
**in that** the solar screen (1) comprises an envelope portion (11) configured so that confines the portion structure (13) and that at least presents at least one envelope material that is planar and flexible, whereby it is preferred when the envelope portion (11) presents frontal (F) and posterior (B) side portions that include at least a first envelope material (111), preferentially a first and a second envelope materials (111, 112) that differ in at least one of thickness and surface reflexion of solar radiation.

10. Solar screen according to any one of previous claims,
**characterized**
**in that** the solar screen (1) comprises an envelope portion (11) provided as a single piece that presents a plurality of collection confinements configured so that collect portion structures (13) inside of the collection confinements, thereby corresponding to individual screen portions (10), and that are separated by folding regions (12), whereby it is preferred when the envelope portion (11) presents a symmetric format relative to a central folding region,
and/or
**in that** the solar screen (1) comprises an envelope portion (11) including frontal and posterior (F, B) side portions retained to each other by means of unions along a respective exterior perimeter, whereby it is preferred when the frontal and posterior (F, B) side portions of the envelope portion (11) include the folding regions (12).

11. Solar screen according to any one of previous claims,
**characterized**
**in that** the solar screen (1) comprises an envelope portion (11) configured according to at least one of:
- so that is provided in a planar and flexible material, including at least one of the list of materials that includes: textile material, polymeric composite material;
- so that is provided in a single piece of a single first envelope material (111) or in two pieces of a first and second envelope materials (111, 112);
- so that extends on both frontal (F) and posterior (B) sides of the screen portions (10) and outside relative to the portion structures (13),
- so that extends continuously in the screen portions (10) and in the folding regions (12) in-between neighbouring screen portions (10);
- so that configures openings in base and/or top regions of respective perimeter regions between the frontal and posterior (F, B) sides of the envelope portion (11) of the solar screen (1).

12. Solar screen according to any one of previous claims,
**characterized**
**in that** the solar screen (1) is configured according to at least one of:
- so that presents a symmetric format relative to a central axis of the solar screen (1), preferentially at least relative to a central axis of the transversal extension of the solar screen (1);
- so that presents screen portions (10) that extend successively along a single direction and that preferentially present at least one of: at least two different shapes, at least two different plane areas,
- so that presents at least two, preferentially at least four, more preferentially at least eight screen portions (10);
- so that presents at least two, preferentially at least four portion structures (13) that present at least one of: a different number of structural elements (131), different format of structural elements (131);
- so that presents a first group of screen portions (10) that presents an at least approximately equal first width at least on a central region of the solar screen (1); a second group of screen portions (10) that presents an at least approximately equal second width and that are preferentially arranged laterally on each side of the first group, and at least a third group of screen portions (10) in lateral edge regions of the solar screen (1), whereby it is preferred when the first width is bigger than the second width so as to increase structural resistance with increasing distance from screen portions (10) to a central region of the solar screen (1).

13. Process for producing a solar screen (1) configured for shadowing inwards of the front shield of a vehicle,
**characterized**
**in that** the process includes the steps:
- providing a portion of envelope (11) from at least one preferentially flexible first envelope material (111), preferentially from at least a first and second envelope materials (111, 112),
- providing a plurality of screen portions (10) on the envelope portion (11) by means of attaching mutually opposing sides of envelope portion (11) to each other, preferentially along linear alignments, thereby simultaneously defining a confinement space in each screen portion (10) and folding regions (12) in-between confinements spaces of screen portions (10),
- providing a plurality of portions structures (13), preferentially each presenting dimensions and format at least approximately corresponding to the dimensions and format of inside perimeter of the confinement space of a respective screen portion (10);
- arranging each of the portion structures (13) inside of a respective confinement space of a respective screen portion (10) of the envelope portion (11);
- closing the envelope portion (11) so that a plurality of confinement spaces confines respective portion structures (13) separated by folding regions (12).

14. Process according to claim 13,
**characterized**
**in that** the step of providing a plurality of portion structures (13) includes the following steps:
- providing a plurality of first structure elements (131) of linear elongated shape, preferentially tubular;
- conforming each one of the first structure elements (131) in a shape of closed perimeter frame so that the respective free edges result in direct opposition and at least in the proximity of each other;
- uniting the free edges of each first structural element (131) by means of mechanical connection, preferentially by means of pressurised fitting of a fist connection part (133);
- optionally, further retention of a second structure element (132) presenting a linear elongated format between mutually opposing portions of first structural elements (131) conformed in shape of a closed perimeter frame, preferentially by means of pressurised fitting by means of a second connection part (134).

15. Process according to claims 13 or 14,
**characterized**
**in that** the step of providing an envelope portion (11) presenting a plurality of screen portions (10) includes the steps:
- providing a flexible first envelope material (111) and cutting the first envelope material (111) so that can be united in a shape of envelope whereby the first envelope material (111) provides at least a portion of, preferentially the entire extension of the frontal and posterior sides (F, B) of the envelope portion (11);
or
- providing a first and second flexible envelope materials (111, 112), preferentially both flexible, and cutting the first and second flexible envelope materials (111, 112) in an at least approximately equal format, so that can be united in juxtaposition in an envelope shape thereby configuring layers of front and back side walls of solar screen (1);
- disposing the first and second envelope materials (111, 112) in juxtaposition, so that a first envelope material (111) extends outside of a second envelope material (112);
and further includes the steps:
- providing the folding regions (12) by means of sewing yarns between the frontal and posterior portions of the envelope (11) along linear alignments in the dividing regions between neighbouring screen portions (10) and respective portion structures (13).
